# EUROPEAN PATENT SPECIFICATION

(11) **EP 3 512 924 B1**
(45) Date of publication and mention of the grant of the patent: **27.12.2023**
(21) Application number: 17784862.9
(22) Date of filing: 08.09.2017
(51) Int. Cl.: C10G 21/27, C10G 29/20, C10L 3/10

(54) **USE OF COMPOSITIONS HAVING A CONTENT OF CONDENSATION PRODUCT OF 1-AMINOPROPAN-2-OL AND FORMALDEHYDE IN THE REMOVAL OF SULPHUR COMPOUNDS FROM PROCESS STREAMS**
VERWENDUNG VON ZUSAMMENSETZUNGEN MIT EINEM GEHALT EINES KONDENSATIONSPRODUKTES VON 1-AMINOPROPAN-2-OL UND FORMALDEHYD BEI DER ENTFERNUNG VON SCHWEFELVERBINDUNGEN AUS PROZESSSTRÖMEN
UTILISATION DE COMPOSITIONS PRÉSENTANT UNE TENEUR EN PRODUIT DE CONDENSATION DU 1-AMINOPROPAN-2-OL ET DU FORMALDÉHYDE DANS L'ÉLIMINATION DE COMPOSÉS SOUFRÉS HORS D'UN LIQUIDE À TRAITER

(30) Priority: 15.09.2016 DE 102016117399
(43) Date of publication of application: 24.07.2019
(73) Proprietor: Vink Chemicals GmbH & Co. KG, 21255 Kakenstorf (DE)
(72) Inventor: BEILFUSS, Wolfgang, 22339 Hamburg (DE); GRADTKE, Ralf, 25436 Tornesch (DE); KNOPF, Jennifer, 22297 Hamburg (DE); WEBER, Klaus, 20146 Hamburg (DE)
(74) Representative: LKGLOBAL Lorenz & Kopf Patentanwalt Attorney at Law PartG mbB
(86) International application number: PCT/EP2017/072648
(87) International publication number: WO 2018/050567

(56) References cited:
- WO-A1-90/07467
- WO-A1-98/02501
- WO-A1-2008/124404
- US-A- 4 978 512
- US-A- 5 128 049
- Madsen H. T. ET AL: "Triazine-based H2S Scavenging: Development of a Conceptual Model for the Understanding of Fouling Formation", PETROLEUM SCIENCE AND TECHNOLOGY, vol. 32, no. 23, 31 October 2014 (2014-10-31), pages 2803-2806, XP093026724, US ISSN: 1091-6466, DOI: 10.1080/10916466.2014.915852

## Description

The present invention relates to the use of a composition that comprises a) one or more condensation products of 1-aminopropan-2-ol and formaldehyde and b) monoethylene glycol, in the removal of sulphur compounds from process streams. In addition, the invention relates to a corresponding method for removing one or more sulphur compounds from a process stream.

H₂S is an unpleasantly smelling and toxic gas that is a hazard to health to a great extent and furthermore leads in industrial systems to serious corrosion phenomena. The legislator has therefore enacted strict requirements for lowering the H₂S content in gaseous and liquid streams.

WO90/07467 A1 discloses condensation products of formaldehyde and ethanolamine (such as 3,3'-methylenebisoxazolidine and N,N',N"-tris(2-hydroxyethyl)hexahydrotriazine) and use thereof in gaseous and liquid hydrocarbon streams, in order to decrease therein the amount of hydrogen sulphide and organic sulphides. In addition, it is indicated that, in the case of hydrocarbon streams that contain water, glycols can be added in order at the same time to reduce the water content. An exemplary and preferred glycol is triethylene glycol.

WO2016/100224 A2 discloses compositions for removing sulphur compounds from moist or dry gaseous streams. The compositions, in addition to at least one compound for capturing the sulphur compound, further contain at least one hygroscopic agent. Preferred compounds for capturing the sulphur compounds are triazines of monoethanolamine, methylamine or methoxypropylamine. An exemplary hygroscopic agent is glycerol.

US 5,128,049 A describes a method for reducing the hydrogen sulfide content of hydrocarbon-containing fluids and aqueous solutions through a two-stage injection procedure whereby a dilute solution of a scavenging agent is injected into a hydrogen sulfide-containing fluid, followed by equilibration and a second injection of dilute solution of scavenging agent to further reduce the hydrogen sulfide content of the treated fluid.

WO 98/02501 A1 is directed to a method for scavenging sulfyhydryl compounds from sour hydrocarbon substrates, preferably crude oils, refined distillate streams, and natural gas, by mixing said substrates with preferably substantially water free bisoxazolidines.

US 4,978,512 A is directed to methods for selectively reducing the levels of hydrogen sulfide and organic sulfides from gaseous and/or liquid hydrocarbon streams, particularly natural gas streams, compromising contacting the streams with a composition comprising the reaction product of (i) a lower alkanolamine with (ii) a lower aldehyde.

Grotan^{®} OX (i.e. 3,3'-methylenebis[5-methyloxazolidine]) is an anhydrous condensation product of formaldehyde and 1-aminopropan-2-ol (monoisopropanolamine, MIPA) in the molar ratio 3:2, (Schülke & Mayr GmbH, Norderstedt, Federal Republic of Germany). The product Grotan^{®} WS contains about 80% by weight of the formaldehyde donor compound α,α',α"-trimethyl-1,3,5-triazine-1,3,5-(2H,4H,6H)triethanol (N,N',N"-tris(2 hydroxypropyl)hexahydrotriazine, hereinafter TTT). TTT is produced by condensation of 1-aminopropan-2-ol with formaldehyde (in the molar ratio 1:1). Grotan^{®} OX and Grotan^{®} WS show good efficacy in the chemical neutralization of H₂S.

The problem addressed by the present invention is to provide compositions that remove sulphur compounds from process streams, more precisely also from those process streams that preferably contain little or no water, including liquid and gaseous process streams (such as, in particular, hydrocarbon process streams). H₂S trapping compositions having improved efficiency and advantages in application which additionally are also more economical are sought.

It has now surprisingly been found that this problem is solved by using, in the removal of sulphur compounds from process streams
a) one or more condensation products of 1-aminopropan-2-ol and formaldehyde and
b) monoethylene glycol,
wherein the weight ratio used of a):b) is in the range from 5:95 to 70:30. The components a) and b) are preferably used according to the invention as a composition comprising a) and b), wherein component a) is present in an amount from 5 to 70% by weight and component b) is present in an amount from 30 to 95% by weight, in each case based on the weight of the composition.

The invention is based, inter alia, on the fact that it has been found that the efficiency of condensation products of 1-aminopropan-2-ol and formaldehyde in the removal of sulphur compounds from process streams may be significantly increased by addition of monoethylene glycol. In addition, it is advantageous that, in the compositions according to the invention, the proportion of component b) does not impair those product properties such as handleability and flashpoint. Even in the case of the condensation product N,N',N"-tris(2-hydroxypropyl)hexahydrotriazine, that already acts well when used alone, there is an increase in activity when monoethylene glycol is added. Although, by addition of propylene glycol, a certain improvement in activity may be achieved, this improvement, however, is markedly less than compared with the effect with monoethylene glycol.

In a first aspect, the invention therefore relates to the use of a composition that comprises
a) one or more condensation products of 1-aminopropan-2-ol and formaldehyde and
b) monoethylene glycol,
wherein component a) is present in an amount from 5 to 70% by weight and component b) is present in an amount from 30 to 95% by weight, in each case based on the weight of the composition,

in the removal of sulphur compounds from process streams. The component a) is a condensation product of 1-aminopropan-2-ol and formaldehyde, or a mixture of such condensation products. Preferably, the condensation product is produced by reacting 1-aminopropan-2-ol and formaldehyde in the molar ratio 1:0.8 to 1:1.8, preferably in the molar ratio 1:0.9 to 1:1.6.

In a first preferred embodiment, the condensation product is 3,3'-methylenebis[5-methyloxazolidine], i.e. the condensation product of formaldehyde and 1-aminopropan-2-ol in the molar ratio 3:2. In this case it is preferred that the component a) is 3,3'-methylenebis[5-methyloxazolidine]. In this first preferred embodiment, preferably component a) is present in an amount from 20 to 60% by weight, and component b) is present in an amount from 40 to 80% by weight.

Particularly preferably, in the first preferred embodiment, component a) is present in an amount from 30 to 50% by weight and component b) is present in an amount from 50 to 70% by weight, wherein, in particular, component a) is present in an amount of about 40% by weight and component b) is present in an amount of about 60% by weight.

This first preferred embodiment in which component a) comprises 3,3'-methylenebis[5-methyloxazolidine] and preferably, component a) is 3,3'-methylenebis[5-methyl-oxazolidine], wherein, particularly preferably, component a) is present in an amount from 30 to 50% by weight and component b) is present in an amount from 50 to 70%, is therefore particularly advantageous because the surprising effect in lowering the content of sulphur compounds already results after a short exposure time and the reinforcement of the effect by the content of monoethylene glycol is particularly pronounced (see Examples 6 to 8 and, in particular, Example 7).

In this first preferred embodiment, it is further preferred that the composition comprises less than 10% by weight of water, preferably less than 5% by weight of water, in particular less than 2% by weight of water, such as less than 1% by weight of water.

Particularly, preference is therefore given to the use of a composition that consists of a) about 40% by weight of 3,3'-methylenebis[5-methyloxazolidine] and b) about 60% by weight of monoethylene glycol.

In a second preferred embodiment, the condensation product is N,N',N"-tris(2-hydroxypropyl)hexahydrotriazine, i.e. the condensation product of formaldehyde and 1-aminopropan-2-ol in the molar ratio 3:3 (1:1), wherein component a) is preferably N,N',N"-tris(2-hydroxypropyl)hexahydrotriazine. In this second preferred embodiment, the composition preferably comprises 2 to 25% by weight of water, more preferably 5 to 20% by weight of water, in particular 10 to 15% by weight of water, such as 12% by weight of water.

In addition, in this second preferred embodiment, it is preferred that component a) is present in an amount from 35 to 60% by weight and component b) is present in an amount from 30 to 50% by weight, wherein preferably component a) is present in an amount from 40 to 55% by weight and component b) is present in an amount from 35 to 45% by weight, wherein, in particular component a) is present in an amount of about 48% by weight and component b) is present in an amount of about 40% by weight.

In all embodiments of the invention it is advantageous when the composition does not comprise a dialkylhydroxylamine of the formula RR'NOH, wherein R and R' independently of one another are selected from linear, branched and cyclic C₁ to C₁₀ alkyl groups.

It is in addition advantageous when the composition does not contain an additive selected from urea, urea derivatives, amino acids, guanidine and guanidine derivatives.

The process stream is preferably selected from liquid and gaseous process streams.

Preferably, the process stream contains at most 40% by weight of water, more preferably at most 35% by weight of water, particularly preferably at most 30% by weight of water, such as at most 25% by weight of water, or at most 20% by weight, or at most 15% by weight, for instance at most 10% by weight, or at most 5% by weight, for example at most 1% by weight, of water. Fields of use are, inter alia, biogas plants, the transport of petroleum and natural gas, the processing, storage and transport of fossil energy carriers and the removal of H₂S liberated by sulphate-reducing bacteria under anaerobic conditions. Examples of H₂S-containing streams or products are petroleum, crude oil, mineral oil, heating oil, diesel fuel, bitumen, distillation residues, drilling liquid and wastewater. Particular preference is given to the use according to the invention of the compositions in process streams that are hydrocarbon streams. Preferably, the process stream is a liquid or gaseous hydrocarbon stream.

The sulphur compound, for the removal of which the described composition is used, is selected from hydrogen sulphide, inorganic and organic sulphides, mercaptans and mercaptides, wherein the composition is preferably used in the removal of hydrogen sulphide from process streams. In a second aspect, the invention relates to a method for removing one or more sulphur compounds from a process stream, in which the process stream that contains the sulphur compound or sulphur compounds is contacted with a composition that comprises
a) one or more condensation products of l-aminopropan-2-ol and formaldehyde and
b) monoethylene glycol,
wherein component a) is present in an amount from 15 to 70% by weight and component b) is present in an amount from 30 to 85% by weight, in each case based on the weight of the composition.

The present disclosure further describes that it is possible to add components a) and b) to the process stream separately in the said weight ratio. Correspondingly, described herein is also the use of a) one or more condensation products of l-aminopropan-2-ol and formaldehyde, and b) monoethylene glycol, wherein the weight ratio used of a) :b) is in the range from 5:95 to 70:30, in the removal of sulphur compounds from process streams.

According to the invention, it is used according to the first and second aspects, compositions which comprise the components a) and b). These compositions have a low viscosity and offer advantages with respect to cost savings, economic efficiency, cold stability and flow behaviour.

The advantages of the invention result, in particular, from the following examples. Percentages, unless stated otherwise, relate to the weight.

### Examples

### 1. Condensation products used

### Grotan^{®} OX:

The reaction product of isopropanolamine and paraformaldehyde (91%) is formed in the molar ratio 2:3. In this case 3,3'-methylenebis(5-methyloxazolidine) is formed. The reaction water and the water from the paraformaldehyde are distilled off.

### Grotan^{®} WS:

The reaction product is formed from isopropanolamine and paraformaldehyde (91%) in the molar ratio 3:3 (1:1). This forms α,α',α"-trimethyl-1,3,5-triazine-1,3,5-(2H,4H,6H)- triethanol (N,N`,N "-tris(2-hydroxypropyl)hexahydrotriazine, TTT). The reaction water and the water from the paraformaldehyde remain in the product. The TTT content is about 80% by weight.

### 2. Method: Determination of the sulphide concentration (based on IP 570, determination of hydrogen sulphide in mineral oils)

- Action of the differing sulphur capturing agents on the sample at various temperatures and for differing times
- Dilution of the sample with alkylbenzene in order to arrive at the linear working range of the analysis system
- Injection of the sample under investigation (including sulphur capturing agent) into the analysis system
- Addition of acid (2M H₃PO₄ in water) and optionally heating the analytical sample in the analysis system
- Quantitative expulsion of the resultant hydrogen sulphide in the analysis system by means of air and transfer of the hydrogen sulphide to an electrochemical measuring electrode in the analysis apparatus
- The hydrogen sulphide generates, at the electrochemical measurement electrode, a measurement signal that is proportional to the respective hydrogen sulphide amount
- By means of evaluation software, the resultant peak area (composed of measured signal intensity against time) is determined and converted to a sulphide content, on the basis of a calibration line

### 3. Study of various formaldehyde condensation products, glycols and mixtures thereof

In order to show the advantages of the compositions used according to the invention, a test was made as to what action various compositions have on the removal of H₂S in C₁₀₋₁₃ alkyl benzene (sulphide concentration 200 ppm). The samples were heated for this purpose to 50°C and the compositions were used in an amount in each case of 1000 ppm, wherein in the table hereinafter, for the mixtures of condensation product and glycol (monoethylene glycol and propylene glycol) in each case the weight ratio is stated. The results in the case of percentage reduction of H₂S content after exposure for 2 or 24 hours are given in Tab. 1.

**Tab. 1**

| **No.** | **Composition** | **2 h** | **24 h** |
|---|---|---|---|
| 1* | Monoethylene glycol | 2.3% | 5.8% |
| 2* | Grotan^{®} OX | 7.9% | 17.8% |
| 3* | Grotan^{®} OX + Monoethylene glycol (9:1) | 9.7% | 24.5% |
| 4 * | Grotan^{®} OX + Monoethylene glycol (8:2) | 18.7% | - |
| 5 | Grotan^{®} OX + Monoethylene glycol (6:4) | 21.9% | 82.6% |
| 6 | Grotan^{®} OX + Monoethylene glycol (1:1) | 23.3% | 86.1% |
| 7 | Grotan^{®} OX + Monoethylene glycol (4:6) | 25.4% | 88.0% |
| 8 | Grotan^{®} OX + Monoethylene glycol (3:7) | 21.5% | 93.6% |
| 9 | Grotan^{®} OX + Monoethylene glycol (2:8) | 22.3% | 97.5% |
| 10 | Grotan^{®} OX + Monoethylene glycol (1:9) | 14.6% | 99.4% |
| 11* | Grotan^{®} OX + Propylene glycol (4:6) | 13.8% | 34.0% |
| 12* | Grotan^{®} WS | 14.0% | 72.4% |
| 13 | Grotan^{®} WS + Monoethylene glycol (6:4) | 25.0% | 88.9% |

| | | | |
|---|---|---|---|
| * Comparison - Experiment not carried out | | | |

The results verify that monoethylene glycol and the condensation products of 1-aminopropan-2-ol and formaldehyde (Grotan^{®} OX and Grotan^{®} WS) in each case alone reduce the H₂S content only insufficiently, and more precisely not only for the exposure time of 2 h, but also for the exposure time of 24 h (comparative experiments 1, 2 and 12). The same applies to compositions consisting of Grotan^{®} OX and monoethylene glycol in the weight ratios 9:1 and 8:2 (comparative experiments 3 and 4), that is to say having a small fraction of monoethylene glycol, and also to compositions consisting of Grotan^{®} OX and propylene glycol (comparative experiment 11).

In contrast, the compositions according to the invention consisting of i) condensation product of 1-aminopropan-2-ol and formaldehyde (Grotan^{®} OX or Grotan^{®} WS) and ii) monoethylene glycol surprisingly act considerably better when the content of monoethylene glycol is higher than 20% by weight (experiments 5 to 10 and 13). In the case of compositions according to the invention consisting of i) Grotan^{®} OX and ii) monoethylene glycol, for an exposure time of only 2 h, it is shown that a composition consisting of Grotan^{®} OX and monoethylene glycol in the weight ratio 4:6 (experiment 7) already acts well (reducing the H₂S content by 25.4%), and for an exposure time of 24 h, the reduction is even 88%. In the case of the markedly longer exposure time of 24 h, in contrast, a mixture consisting of Grotan^{®} OX and monoethylene glycol in the weight ratio 1:9 (experiment 10) acts excellently (reduction by 99.4%).

### 4. Particularly preferred composition

For production of the particularly preferred composition consisting of a) 40% by weight of 3,3'-methylenebis-[5-methyloxazolidine] and b) 60% by weight of monoethylene glycol, monoethylene glycol is charged and Grotan^{®} OX is added. After brief stirring, a clear, colourless solution is obtained having the following properties (Tab. 2).

**Tab. 2**

| Appearance | clear, colourless solution |
|---|---|
| Hazen colour number | 11 |
| Density at 20°C, g/ml | 1.108 |
| Refraction at 20°C | 1.457 |
| Cleavable HCHO, % | 17.9 |

The storage stability of this composition was studied by storing samples for 1 month at 25°C or 40°C in PE bottles (Tab. 3):

**Tab. 3**

| After 1 month of storage at | 25°C | 40°C |
|---|---|---|
| Appearance | clear, slightly yellowish | light yellow |
| Hazen colour number | 29 | 70 |
| Density at 20°C, g/ml | 1.108 | 1.108 |
| Refraction at 20°C | 1.457 | 1.457 |
| Cleavable HCHO, % | 17.7 | 17.8 |
| Reduction of H₂S content, 2 h, % | 26.0 | 27.9 |
| Reduction of H₂S content, 24 h, % | 87.5 | 87.4 |

The results in Tab. 3 verify that this particularly preferred composition has not lost the activity in the reduction of H₂S content even after storage for one month at an elevated temperature of 40°C.

## Claims

1. Use of a composition that comprises
a) one or more condensation products of 1-aminopropan-2-ol and formaldehyde and
b) monoethylene glycol,
wherein component a) is present in an amount from 5 to 70% by weight and component b) is present in an amount from 30 to 95% by weight, in each case based on the weight of the composition, in the removal of sulphur compounds from process streams.

2. Use according to Claim 1, **characterized in that** the condensation product is produced by reacting 1-aminopropan-2-ol and formaldehyde in the molar ratio 1:0.8 to 1:1.8, preferably in the molar ratio 1:0.9 to 1:1.6.

3. Use according to Claim 2, **characterized in that** the component a) is 3,3' - methylenebis[5-methyloxazolidine ].

4. Use according to Claim 3, **characterized in that** component a) is present in an amount from 20 to 60% by weight, and component b) is present in an amount from 40 to 80% by weight,
wherein preferably component a) is present in an amount from 30 to 50% by weight, and component b) is present in an amount from 50 to 70% by weight,
wherein, in particular component a) is present in an amount of about 40% by weight and component b) is present in an amount of about 60% by weight.

5. Use according to Claim 4, **characterized in that** the composition comprises less than 10% by weight of water, preferably less than 5% by weight of water, in particular less than 2% by weight of water, such as less than 1% by weight of water.

6. Use according to Claim 2, **characterized in that** component a) is N,N',N"-tris (2-hydroxypropyl)hexahydrotriazine.

7. Use according to Claim 6, **characterized in that** the composition comprises 2 to 25% by weight of water, preferably 5 to 20% by weight of water, in particular 10 to 15% by weight of water, such as 12% by weight of water.

8. Use according to Claim 6 or Claim 7, **characterized in that** component a) is present in an amount from 35 to 60% by weight and component b) is present in an amount from 30 to 50% by weight,
wherein preferably component a) is present in an amount from 40 to 55% by weight and component b) is present in an amount from 35 to 45% by weight,
wherein, in particular component a) is present in an amount of about 48% by weight and component b) is present in an amount of about 40% by weight.

9. Use according to one of the preceding claims, **characterized in that** the composition does not comprise a dialkylhydroxylamine of the formula RR'NOH, wherein R and R' independently of one another are selected from linear, branched and cyclic C₁ to C₁₀ alkyl groups, and/or **characterized in that** the composition does not comprise an additive selected from urea, urea derivatives, amino acids, guanidine and guanidine derivatives.

10. Use according to one of the preceding claims, **characterized in that** the process stream is selected from liquid and gaseous process streams.

11. Use according to one of the preceding claims, **characterized in that** the process stream contains at most 40% by weight of water, preferably at most 35% by weight of water, particularly preferably at most 30% by weight of water, such as at most 25% by weight of water, or at most 20% by weight, or at most 15% by weight, for instance at most 10% by weight, or at most 5% by weight, for example at most 1% by weight, of water.

12. Use according to one of the preceding claims, **characterized in that** the process stream is a hydrocarbon stream.

13. Use according to one of the preceding claims, **characterized in that** the sulphur compound is selected from hydrogen sulphide, inorganic and organic sulphides, mercaptans and mercaptides,
wherein the composition is preferably used in the removal of hydrogen sulphide from process streams.

14. Method for removing one or more sulphur compounds from a process stream, in which the process stream that contains the sulphur compound or sulphur compounds is contacted with a composition that comprises
a) one or more condensation products of 1-aminopropan-2-ol and formaldehyde and
b) monoethylene glycol,
wherein component a) is present in an amount from 15 to 70% by weight and component b) is present in an amount from 30 to 85% by weight, in each case based on the weight of the composition.

## Patentansprüche

1. Verwendung einer Zusammensetzung, die
a) ein oder mehrere Kondensationsprodukte von 1-Aminopropan-2-ol und Formaldehyd und
b) Monoethylenglykol umfasst,
wobei Komponente a) in einer Menge von 5 bis 70 Gewichts-% vorhanden ist und Komponente b) in einer Menge von 30 bis 95 Gewichts-% vorhanden ist, jeweils bezogen auf das Gewicht der Zusammensetzung,
bei der Entfernung von Schwefelverbindungen aus Prozessströmen.

2. Verwendung nach Anspruch 1, **dadurch gekennzeichnet, dass** das Kondensationsprodukt hergestellt ist durch Umsetzung von 1-Aminopropan-2-ol und Formaldehyd im molaren Verhältnis 1:0,8 bis 1:1,8, vorzugsweise im molaren Verhältnis 1:0,9 bis 1:1,6.

3. Verwendung nach Anspruch 2, **dadurch gekennzeichnet, dass** das Komponente a) 3,3'-Methylenbis[5-methyloxazolidin] ist.

4. Verwendung nach Anspruch 3, **dadurch gekennzeichnet, dass** Komponente a) in einer Menge von 20 bis 60 Gewichts-% vorhanden ist und Komponente b) in einer Menge von 40 bis 80 Gewichts-% vorhanden ist,
wobei vorzugsweise Komponente a) in einer Menge von 30 bis 50 Gewichts-% vorhanden ist und Komponente b) in einer Menge von 50 bis 70 Gewichts-% vorhanden ist,
wobei insbesondere Komponente a) in einer Menge von etwa 40 Gewichts-% vorhanden ist und Komponente b) in einer Menge von etwa 60 Gewichts-% vorhanden ist.

5. Verwendung nach Anspruch 4, **dadurch gekennzeichnet, dass** die Zusammensetzung weniger als 10 Gewichts-% Wasser umfasst, vorzugsweise weniger als 5 Gewichts-% Wasser, insbesondere weniger als 2 Gewichts-% Wasser, wie beispielsweise weniger als 1 Gewichts-% Wasser.

6. Verwendung nach Anspruch 2, **dadurch gekennzeichnet, dass** Komponente a) N,N',N"-Tris(2-hydroxypropyl)hexahydrotriazin ist.

7. Verwendung nach Anspruch 6, **dadurch gekennzeichnet, dass** die Zusammensetzung 2 bis 25 Gewichts-% Wasser umfasst, vorzugsweise 5 bis 20 Gewichts-% Wasser, insbesondere 10 bis 15 Gewichts-% Wasser, wie beispielsweise 12 Gewichts-% Wasser.

8. Verwendung nach Anspruch 6 oder Anspruch 7, **dadurch gekennzeichnet, dass** Komponente
a) in einer Menge von 35 bis 60 Gewichts-% vorhanden ist und Komponente b) in einer Menge von 30 bis 50 Gewichts-% vorhanden ist,
wobei vorzugsweise Komponente a) in einer Menge von 40 bis 55 Gewichts-% vorhanden ist und Komponente b) in einer Menge von 35 bis 45 Gewichts-% vorhanden ist,
wobei insbesondere Komponente a) in einer Menge von etwa 48 Gewichts-% vorhanden ist und Komponente b) in einer Menge von etwa 40 Gewichts-% vorhanden ist.

9. Verwendung nach einem der vorhergehenden Ansprüche, **dadurch gekennzeichnet, dass** die Zusammensetzung kein Dialkylhydroxylamin der Formel RR'NOH umfasst, wobei R und R' unabhängig ausgewählt sind aus linearen, verzweigten und cyclischen C₁- bis C₁₀-Alkylgruppen, und/oder **dadurch gekennzeichnet, dass** die Zusammensetzung kein Additiv ausgewählt aus Harnstoff, Harnstoffderivaten, Aminosäuren, Guanidin und Guanidinderivaten umfasst.

10. Verwendung nach einem der vorhergehenden Ansprüche, **dadurch gekennzeichnet, dass** der Prozessstrom ausgewählt ist aus flüssigen und gasförmigen Prozessströmen.

11. Verwendung nach einem der vorhergehenden Ansprüche, **dadurch gekennzeichnet, dass** der Prozessstrom höchstens 40 Gewichts-% Wasser enthält, vorzugsweise höchstens 35 Gewichts-% Wasser, besonders bevorzugt höchstens 30 Gewichts-% Wasser, wie beispielsweise höchstens 25 Gewichts-%, oder höchstens 20 Gewichts-%, oder höchstens 15 Gewichts-%, beispielsweise höchstens 10 Gewichts-%, oder höchstens 5 Gewichts-%, beispielsweise höchstens 1 Gewichts-% Wasser.

12. Verwendung nach einem der vorhergehenden Ansprüche, **dadurch gekennzeichnet, dass** der Prozessstrom ein Kohlenwasserstoffstrom ist.

13. Verwendung nach einem der vorhergehenden Ansprüche, **dadurch gekennzeichnet, dass** die Schwefelverbindung ausgewählt ist aus Schwefelwasserstoff, anorganischen und organischen Sulfiden, Mercaptanen und Mercaptiden,
wobei die Zusammensetzung vorzugsweise bei der Entfernung von Schwefelwasserstoff aus Prozessströmen eingesetzt wird.

14. Verfahren zur Entfernung von einer oder mehreren Schwefelverbindungen aus einem Prozessstrom, bei dem der Prozessstrom, der die Schwefelverbindung oder Schwefelverbindungen enthält, mit einer Zusammensetzung in Kontakt gebracht wird, die
a) ein oder mehrere Kondensationsprodukte von 1-Aminopropan-2-ol und Formaldehyd und
b) Monoethylenglykol umfasst,
wobei Komponente a) in einer Menge von 15 bis 70 Gewichts-% vorhanden ist und Komponente b) in einer Menge von 30 bis 85 Gewichts-% vorhanden ist, jeweils bezogen auf das Gewicht der Zusammensetzung.

## Revendications

1. Utilisation d'une composition qui comprend
a) un ou plusieurs produits de condensation de 1-aminopropan-2-ol et de formaldéhyde et
b) du monoéthylène glycol,
dans laquelle le composant a) est présent en une quantité de 5 à 70 % en poids et le composant b) est présent en une quantité de 30 à 95 % en poids, dans chaque cas sur la base du poids de la composition, dans l'élimination des composés soufrés de flux de traitement.

2. Utilisation selon la revendication 1, **caractérisée en ce que** le produit de condensation est produit en faisant réagir du 1-aminopropan-2-ol et du formaldéhyde selon le rapport molaire 1:0,8 à 1:1,8, de préférence selon le rapport molaire 1:0,9 à 1:1,6.

3. Utilisation selon la revendication 2, **caractérisée en ce que** le composant a) est la 3,3'-méthylènebis[5-méthyloxazolidine].

4. Utilisation selon la revendication 3, **caractérisée en ce que** le composant a) est présent en une quantité de 20 à 60 % en poids, et le composant b) est présent en une quantité de 40 à 80 % en poids,
dans laquelle de préférence le composant a) est présent en une quantité de 30 à 50 % en poids, et le composant b) est présent en une quantité de 50 à 70 % en poids, dans laquelle en particulier le composant a) est présent en une quantité d'environ 40 % en poids et le composant b) est présent en une quantité d'environ 60 % en poids.

5. Utilisation selon la revendication 4, **caractérisée en ce que** la composition comprend moins de 10 % en poids d'eau, de préférence moins de 5 % en poids d'eau, en particulier moins de 2 % en poids d'eau, tel que moins de 1 % en poids d'eau.

6. Utilisation selon la revendication 2, **caractérisée en ce que** le composant a) est la N,N',N"-tris(2-hydroxypropyl)hexahydrotriazine.

7. Utilisation selon la revendication 6, **caractérisée en ce que** la composition comprend de 2 à 25 % en poids d'eau, de préférence de 5 à 20 % en poids d'eau, en particulier de 10 à 15 % en poids d'eau, tel que 12 % en poids d'eau.

8. Utilisation selon la revendication 6 ou la revendication 7, **caractérisée en ce que** le composant a) est présent en une quantité de 35 à 60 % en poids et le composant b) est présent en une quantité de 30 à 50 % en poids,
dans laquelle de préférence le composant a ) est présent en une quantité de 40 à 55 % en poids et le composant b) est présent en une quantité de 35 à 45 % en poids,
dans laquelle, en particulier le composant a) est présent en une quantité d'environ 48 % en poids et le composant b) est présent en une quantité d'environ 40 % en poids.

9. Utilisation selon l'une des revendications précédentes, **caractérisée en ce que** la composition ne comprend pas de dialkylhydroxylamine de formule RR'NOH, dans laquelle R et R' indépendamment l'un de l'autre sont choisis parmi les groupes alkyle en C₁ à C₁₀ linéaires, ramifiés et cycliques, et/ou **caractérisée en ce que** la composition ne comprend pas d'additif choisi parmi l'urée, les dérivés de l'urée, les acides aminés, la guanidine et les dérivés de la guanidine.

10. Utilisation selon l'une des revendications précédentes, **caractérisée en ce que** le flux de traitement est choisi parmi les flux de traitement liquides et gazeux.

11. Utilisation selon l'une des revendications précédentes, **caractérisée en ce que** le flux de traitement contient au plus 40 % en poids d'eau, de préférence au plus 35 % en poids d'eau, de manière particulièrement préférée au plus 30 % en poids d'eau, tel qu'au plus 25 % en poids d'eau, ou au plus 20 % en poids, ou au plus 15 % en poids, par exemple au plus 10 % en poids, ou au plus 5 % en poids, par exemple au plus 1 % en poids, d'eau.

12. Utilisation selon l'une des revendications précédentes, **caractérisée en ce que** le flux de traitement est un flux d'hydrocarbures.

13. Utilisation selon l'une des revendications précédentes, **caractérisée en ce que** le composé soufré est choisi parmi le sulfure d'hydrogène, les sulfures inorganiques et organiques, les mercaptans et les mercaptides,
dans laquelle la composition est de préférence utilisée dans l'élimination du sulfure d'hydrogène de flux de traitement.

14. Procédé d'élimination d'un ou plusieurs composés soufrés d'un flux de traitement, dans lequel le flux de traitement qui contient le composé soufré ou les composés soufrés est mis en contact avec une composition qui comprend
a) un ou plusieurs produits de condensation de 1-aminopropan-2-ol et de formaldéhyde et
b) du monoéthylène glycol,
dans lequel le composant a) est présent en une quantité de 15 à 70 % en poids et le composant b) est présent en une quantité de 30 à 85 % en poids, dans chaque cas sur la base du poids de la composition.
